# EUROPÄISCHE PATENTSCHRIFT

(11) **EP 1 838 569 B1**
(45) Veröffentlichungstag und Bekanntmachung des Hinweises auf die Patenterteilung: **07.12.2011**
(21) Anmeldenummer: 06701190.8
(22) Anmeldetag: 11.01.2006
(51) Int. Cl.: B62D 29/00

(54) **METALLVERSTÄRKTE HYBRIDSTRUKTUR**
METAL-REINFORCED HYBRID STRUCTURE
STRUCTURE HYBRIDE RENFORCEE PAR DU METAL

(30) Priorität: 11.01.2005 DE 102005001367
(43) Veröffentlichungstag der Anmeldung: 03.10.2007
(73) Patentinhaber: Johnson Controls Interiors GmbH & Co. KG, 47929 Grefrath (DE)
(72) Erfinder: FRANKENMOLEN, Jeroen, NL-5641 GB Eindhoven (NL); ZIMMERMANN, Jochen, 42399 Wuppertal (DE); GEIERMANN, Volkmar, 50827 Köln (DE); KRISCH, Wolfgang, 42799 Leichlingen (DE)
(74) Vertreter: Schwöbel, Thilo K.
(86) Internationale Anmeldenummer: PCT/EP2006/050161
(87) Internationale Veröffentlichungsnummer: WO 2006/075010

(56) Entgegenhaltungen:
- EP-A- 1 074 457
- US-A- 4 791 765
- US-A1- 2004 094 684
- US-B1- 6 168 226

## Beschreibung

Die vorliegende Erfindung betrifft ein Bauteil mit einer Hybridstruktur. Des Weiteren betrifft die vorliegende Erfindung ein Verfahren zur Herstellung des erfindungsgemäßen Bauteils.

Kunststoff- /Metallverbundkörper, im folgenden auch als Hybridstruktur bezeichnet, werden im Automobilbereich, insbesondere bei großflächigen Teilen, eingesetzt und sind beispielsweise aus der DE 44 37 773 und der EP 0 721 831 B1 bekannt. Diese Hybridstrukturen weisen jedoch oftmals eine nicht hinreichende mechanische Festigkeit auf.

Die US 4,791,765 A zeigt eine gattungsgemäße Hybridstruktur.

Es war deshalb die Aufgabe, ein Bauteil mit einer Hybridstruktur zur Verfügung zu stellen, das die Nachteile des Standes der Technik nicht aufweist.

Gelöst wird diese Aufgabe mit einem Bauteil gemäß Patentanspruch 1. Bevorzugte Ausführungsformen des erfindungsgemäßen Bauteils sind in den Unteransprüchen 2 bis 6 beansprucht.

Es war für den Fachmann überaus erstaunlich und nicht zu erwarten, dass mit dem erfindungsgemäßen Bauteil nahezu beliebige mechanische Stabilitäten erzielbar sind. Das erfindungsgemäße Bauteil ist einfach und kostengünstig herzustellen.

Erfindungsgemäß weist das Bauteil eine Hybridstruktur auf. Eine Hybridstruktur im Sinne der Erfindung ist ein Kunststoff-/Motallverbundkörper. Als Metalle kommen alle beliebigen, dem Fachmann geläufigen Metalle in Frage. Insbesondere handelt es sich jedoch um Metalle, die schweißbar sind, wie beispielsweise Eisen, Stahl und/oder Aluminium. Dieses Metall ist teilweise mit einer polymeren Komponente verbunden. Dieser Verbund kann form-, kraft- und/oder stoffschlüssig sein. Als polymere Komponenten kommen alle dem Fachmann geläufigen polymerisierten Verbindungen in Frage. Insbesondere handelt es jedoch um Kunststoffe, insbesondere thermoplastische Kunststoffe bzw. Kunststoffmischungen, die besonders bevorzugt Polycarbonat, Polyamid, Polyester, ABS und/oder Polypropylen enthalten. Vorzugsweise enthält die polymere Komponente Verstärkungsmittel wie beispielsweise Glasfasern. Zur Verbesserung des Stoffschlusses zwischen dem Metallteil und der polymeren Komponente kann das Metallteil vorbehandelt sein, z. B. mit einer Haftvermittler- oder einer Klebeschicht. In diesem Zusammenhang ist es möglich, auf das Metallteil eine Folie anzuordnen, vorzugsweise aufzupressen oder aufzuwalzen. Danach wird die polymere Komponente auf dem Metallteil angeordnet. Die Folie schmilzt vorzugsweise bei deren Beschichtung mit der polymeren Komponente und wirkt als Haftvermittler.

Erfindungsgemäß ist das Metallteil jedoch nicht vollständig mit der polymeren Komponente umgeben, sondern weist mindestens einen Bereich auf, der nicht mit der polymeren Komponente umgeben ist, und der mit der Metallverstärkung verbunden ist. Der Verbund mit der Metallverstärkung kann kraft-, form- und/oder stoffschlüssig sein. Vorzugsweise ist die Metallverstärkung jedoch an das Metallteil angeschweißt, wobei die Schweißung vorzugsweise durch Laserschweißung erfolgt. Laserschweißung hat den Vorteil, dass relativ wenig Hitze beim Schweißen entsteht, so dass die polymere Komponente nicht oder nur in geringem Maße beim Schweißen beeinträchtigt wird. Es ist sogar möglich, dass das Metallteil und die Metallverstärkung durch die polymere Komponente hindurch miteinander verschweißt werden. Dabei wird der Laserstrahl durch die polymere Komponente hindurchgeführt Diese Ausführungsform eignet sich insbesondere bei Hybridstrukturen mit einer dünnen Schicht der polymeren Komponente.

Vorzugsweise ist der Bereich, der einem Verbund, vorzugsweise einer Schweißung, ganz besonders bevorzugt einer Laserschweißung, zwischen dem Metallteil und der Metallverstärkung zugängig ist, im Randbereich des Metallteils angeordnet. In einer anderen bevorzugten Ausführungsform handelt es sich bei dem Bereich um eine oder mehrere Ausnehmung(en). Diese Ausnehmungen können auch beim Verbinden, beispielsweise beim Laserschweißen, entstehen.

Die Metallverstärkung kann jede beliebige Form aufweisen, die jeweils benötigt wird, um dem erfindungsgemäßen Bauteil die gewünschten mechanischen Eigenschaften zu verleihen. Vorzugsweise weist die Metallverstärkung einen profilierten Querschnitt auf.

Ein weiterer Gegenstand der vorliegenden Erfindung ist ein Verfahren zur Herstellung des erfindungsgemäßen Bauteils, bei dem das Metallteil und die Metallverstärkung form-, kraft- und/oder stoffschlüssig miteinander verbunden werden.

Das erfindungsgemäße Verfahren ist einfach und kostengünstig durchzuführen.

Bezüglich des Metallteils und der polymeren Komponente wird auf die oben gemachten Ausführungen verwiesen.

Erfindungsgemäß werden das Metallteil und die Metallverstärkung form-, kraft- und/oder stoffschlüssig miteinander verbunden. Ganz besonders bevorzugt handelt es sich bei dem Verbund jedoch um einen Stoffschluss, der durch Kleben oder Schweißen, ganz besonders bevorzugt Laserschweißen, erzielt wird. Laserschweißen hat den Vorteil einer geringen Wärmeentwicklung, so dass die polymere Komponente nicht oder nur wenig geschädigt wird.

Vorzugsweise werden das Metallteil und die Metallverstärkung miteinander verbunden, vorzugsweise verschweißt, nachdem das Metallteil mit der polymeren Komponente umgeben worden ist.

In einer bevorzugten Ausführungsform wird die stoffschlüssige Verbindung zwischen dem Metallteil und der Metallverstärkung durch die polymere Komponente hindurch bewirkt, beispielsweise indem ein Laserstrahl durch die polymere Komponente hindurch geführt wird. Diesbezüglich wird auf die oben gemachten Ausführungen verwiesen.

Im Folgenden wird die Erfindung anhand der Figuren 1 bis 5 erläutert. Diese Erläuterungen sind lediglich beispielhaft und schränken den allgemeinen Erfindungsgedanken nicht ein. Die Erläuterungen gelten für das erfindungsgemäße Bauteil und das erfindungsgemäße Verfahren gleichermaßen.
- **Figur 1**: zeigt eine Ausführungsform des erfindungsgemäßen Bauteils,
- **Figur 2**: zeigt eine Modifikation des Bauteils gemäß Figur 1,
- **Figur 3**: zeigt eine weitere Ausführungsform des erfindungsgemäßen Bauteils und
- **Figur 4**: zeigt noch eine weitere Ausführungsform des erfindungsgemäßen Bauteils.
- **Figur 5**: zeigt noch eine zusätzliche Ausführungsform des erfindungsgemäßen Bauteils.

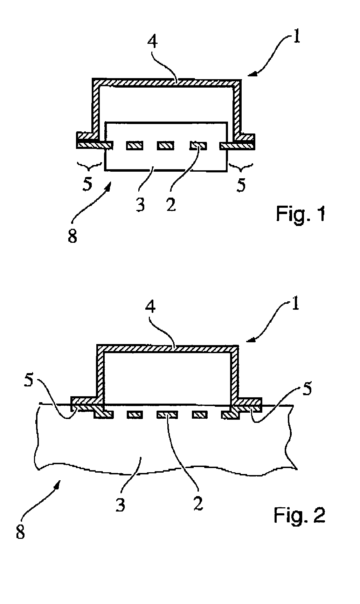

**Figur 1** zeigt eine Ausführungsform des erfindungsgemäßen Bauteils 1, das eine Hybridstruktur 8 und eine Metallverstärkung 4 aufweist, Die Hybridstruktur 8 besteht aus einem Metallteil 2, das teilweise von einer polymeren Komponente 3, beispielsweise einem Kunststoff, umgeben ist. In ihren Randbereichen 5 ist das Metallteil 2 nicht von der polymeren Komponente umgeben und kann hier mit der Metallverstärkung 4 form·, kraft- und/oder stoffschlüssig verbunden worden. In dem vorliegenden Fall sind die Randbereiche 5 und die Metallverstärkung 4 miteinander verschweißt, inbesondere laserverschweißt.

**Figur 2** zeigt im Wesentlichen das Bauteil gemäß Figur 1 mit dem Unterschied, dass bei diesem Beispiel das Metallteil 2 sich nicht in der Mitte der polymeren Komponente 3, sondern in deren Randbereich befindet. Die Bereiche 5 und die Oberseite der Polymerkomponente 3 schließen bündig miteinander ab. Auch in diesem Fall sind die Bereiche 5 mit der Metallverstärkung 4 verschweißt.

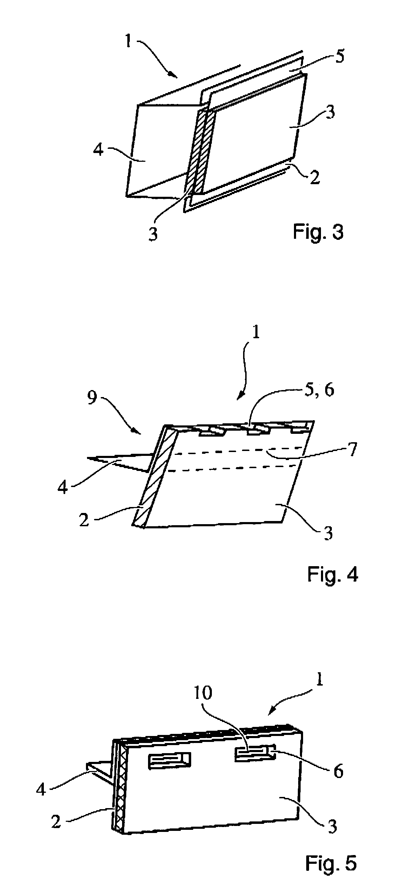

**Figur 3** zeigt eine weitere Ausführungsform des erfindungsgemäßen Bauteils. In dem vorliegenden Fall ist eine Metallplatte 2 rechts und links bis auf den Bereich 5 von einer polymeren Komponente 3 umgeben. In diesem Randbereich 5 ist die Metallplatte 2 mit einer Metallverstärkung 4 verschweißt, vorzugsweise laserverschweißt.

**Figur 4** zeigt eine weitere Ausführungsform des erfindungsgemäßen Bauteils 1. Dieses besteht aus einer Metallplatte 2, die auf ihrer Rückseite mit einer polymeren Komponente 3 beschichtet ist, die im oberen Bereich Aussparungen 6 aufweist.

Diese Aussparungen stellen den Bereich 5 dar, in dem die Platte 2 mit einer Verstärkung 4 stoffschlüssig verbunden, vorzugsweise laserverschweißt werden kann. Des Weiteren wird die Platte 2 noch mit der Metallverstärkung 4 noch im unteren Bereich verschweißt Die Schweißung erfolgt aus der mit Pfeil 8 gekennzeichneten Richtung. Diese Verschweißung hinterlässt in der polymeren Komponente die mit Bezugszeichen 7 bezeichnete Verschmelzung.

**Figur 5** zeigt im Wesentlichen die Ausführungsform gemäß Figur 4_{.} nur dass in dem vorliegenden Fall die Ausnehmungen nicht mehr am Rand, sondern weiter nach unten verlagert ist. Durch die Ausnehmung 6 ist eine Schweißnaht 10 erkennbar, die mit einem Laser hergestellt wurde und die Metallteil 2 und Metallverstärkung 4 miteinander verbindet.

### Bezugszeichenliste

- 1: Bauteil
- 2: Metallteil
- 3: Polymere Komponente
- 4: Metallverstärkung
- 5: Einem Verbund zugänglicher Bereich, in dem das Metallteil und die Metallverstärkung miteinander verschweißt werden können
- 6: Ausnehmung
- 7: Aufschmeizung
- 8: ybridstruktur
- 9: Richtung
- 10: Schweißnaht

## Patentansprüche

1. Bauteil (1) mit einer Hybridstruktur (8), die ein Metallteil (2) aufweist, das teilweise von mindestens einer polymeren Komponente (3) umgeben ist und das mindestens einen Bereich (5) aufweist, der mit einer Metallverstärkung (4) verbunden ist, wobei die Metallverstärkung (4) stoffschlüssig mit dem Metallteil (2) verbunden ist, **dadurch gekennzeichnet, dass** die Metallverstärkung (4) an das Metallteil (2) durch die polymere Komponente hindurch lasergeschweißt ist.

2. Bauteil nach Anspruch 1, **dadurch gekennzeichnet, dass** die polymers Komponente (3) und das Metallteil (2) kraft-, form- und/oder stoffschlüssig miteinander verbunden sind.

3. Bauteil nach einem der voranstehenden Ansprüche, **dadurch gekennzeichnet dass** der Bereich (5) im Randbereich des Metallteils (2) angeordnet ist.

4. Bauteil nach einem der voranstehenden Ansprüche, **dadurch gekennzeichnet, dass** der Bereich (5) eine Ausnehmung (6) ist.

5. Bauteil nach einem der voranstehenden Ansprüche, **dadurch gekennzeichnet, dass** die Metallverstärkung (4) einen profilierten Querschnitt aufweist.

6. Verfahren zur Herstellung eines Bauteils nach einem der voranstehenden Ansprüche, **dadurch gekennzeichnet, dass** das Metallteil (2) und die Metallverstërkung (4) stoffschlüssig miteinander verbunden werden, wobei das Metallteil (2) und die Metallverstärkung (4) miteinander lasergeschweißt werden, nachdem das Metallteil (2) mit der polymeren Komponente (3) verbunden worden ist

7. Verfahren nach einem der voranstehenden Ansprüche, **dadurch gekennzeichnet, dass** das Metallteil mit der polymeren Komponente umspritzt und/oder umformt wird.

8. Verfahren nach einem der voranstehenden Ansprüche, **dadurch gekennzeichnet, dass** die Laserschweißung zwischen dem Metallteil (2) und der Metallverstärkung (4) durch die polymere Komponente hindurch erfolgt.

## Claims

1. Component (1) with a hybrid structure (8), which has a metal part (2) that is partially surrounded by at least one polymer component (3) and exhibits at least one region (5) that is connected to a metal reinforcement (4), the metal reinforcement (4) being connected to the metal part (2) with a material fit, **characterized in that** the metal reinforcement (4) is laser welded to the metal part (2) through the polymer component.

2. Component according to Claim 1, **characterized in that** the polymer component (3) and the metal part (2) are connected together in a positive, non-positive or material fit.

3. Component according to one of the preceding claims, **characterized in that** the region (5) is arranged in the edge region of the metal part (2).

4. Component according to one of the preceding claims, **characterized in that** the region (5) is a recess (6).

5. Component according to one of the preceding claims, **characterized in that** the metal reinforcement (4) has a profiled cross section.

6. Method for producing a component according to one of the preceding claims, **characterized in that** the metal part (2) and the metal reinforcement (4) are connected together with a material fit, the metal part (2) and the metal reinforcement (4) being laser welded together after the metal part (2) has been connected to the polymer component (3).

7. Method according to one of the preceding claims, **characterized in that** the metal part is surrounded with the polymer component by injection molding and/or forming.

8. Method according to one of the preceding claims, **characterized in that** the laser welding between the metal part (2) and the metal reinforcement (4) takes place through the polymer component.

## Revendications

1. Composant (1) présentant une structure hybride (8), qui comporte une pièce métallique (2) qui est entourée partiellement par au moins un composant polymère (3) et qui présente au moins une zone (5), qui est assemblée à un renfort métallique (4), dans lequel le renfort métallique (4) est assemblé en complémentarité de matière à la pièce métallique (2), **caractérisé en ce que** le renfort métallique (4) est soudé au laser à la pièce métallique (2) à travers le composant polymère.

2. Composant selon la revendication 1, **caractérisé en ce que** le composant polymère (3) et la pièce métallique (2) sont assemblés l'un à l'autre en complémentarité de force, de forme et/ou de matière.

3. Composant selon l'une quelconque des revendications précédentes, **caractérisé en ce que** la zone (5) est disposée dans la région du bord de la pièce métallique (2).

4. Composant selon l'une quelconque des revendications précédentes, **caractérisé en ce que** la zone (5) est un évidement (6).

5. Composant selon l'une quelconque des revendications précédentes, **caractérisé en ce que** le renfort métallique (4) présente une section transversale profilée.

6. Procédé de fabrication d'un composant selon l'une quelconque des revendications précédentes, **caractérisé en ce que** l'on assemble l'une à l'autre la pièce métallique (2) et le renfort métallique (4), dans lequel on soude au laser l'une à l'autre la pièce métallique (2) et le renfort métallique (4), après que la pièce métallique (2) ait été assemblée au composant polymère (3).

7. Procédé selon l'une quelconque des revendications précédentes, **caractérisé en ce que** l'on enrobe et/ou l'on façonne la pièce métallique avec le composant polymère.

8. Procédé selon l'une quelconque des revendications précédentes, **caractérisé en ce que** l'on effectue le soudage au laser entre la pièce métallique (2) et le renfort métallique (4) à travers le composant polymère.
